# EUROPEAN PATENT APPLICATION

(11) **EP 4 043 298 A1**
(43) Date of publication of application: **17.08.2022**
(21) Application number: 19951192.4
(22) Date of filing: 09.12.2019
(51) Int. Cl.: B60R 25/10

(54) **INFORMATION PROCESSING METHOD AND DEVICE, AND COMPUTER READABLE STORAGE MEDIUM**

(30) Priority: 30.10.2019 CN 201911043679
(71) Applicant: PATEO CONNECT+ Technology (Shanghai) Corporation, Shanghai 201821 (CN)
(72) Inventor: XU, Tingting, Shanghai 201821 (CN); YING, Zhenkai, Shanghai 201821 (CN)
(74) Representative: Manitz Finsterwald Patent- und Rechtsanwaltspartnerschaft mbB
(86) International application number: PCT/CN2019/124077
(87) International publication number: WO 2021/082193

(57) **Abstract**

An information processing method and device, and a computer readable storage medium. The method comprises: determining, at a server, a second mobile device on the basis of a task request from a first mobile device (202), the second mobile device being used for receiving an authorization certificate of a vehicle associated with the first mobile device, and the task request comprising task information used for identifying a task associated with the vehicle; sending vehicle status information of the vehicle, the task information, and the authorization certificate to the second mobile device (204); in response to determining that an unlock request from the second mobile device comprises a valid authorization certificate, sending an unlock command to the vehicle to unlock the vehicle (206); in response to determining that the vehicle is unlocked, sending vehicle status information to the first mobile device and the second mobile device (208); and updating the validity of the authorization certificate on the basis of the vehicle status information and the task information (210). In this way, remote information processing for a vehicle, particularly key sharing, can be implemented simply and safely.

## Description

### TECHNICAL FIELD

The embodiments of the present disclosure generally relate to the technical field of information processing, and more particularly relates to an information processing method and device, and a computer-readable storage medium.

### BACKGROUND

In the IoV (Internet of Vehicles), a server platform may communicate with vehicles and information service facilities in the network in real time, so that users driving vehicles can obtain information and services related to the vehicles in real time by means of mobile devices, for example. This provides convenient conditions for the users to obtain personalized services and pushes in an IoV environment.

While the users can drive the vehicle conveniently, the user may also need to perform remote operations (hereinafter referred to as "tasks") on the vehicles when away from the vehicles, such as refueling/charging/repairing the vehicles away from the users. In the conventional implementation of the IoV, this is usually completed by the users sharing electronic keys (for example, installed on the mobile devices) with other users, and the other users arrive at parking places of the vehicles and drive the vehicles. However, it is difficult to balance the needs of simplicity and security at the same time.

### SUMMARY

The embodiments of the present disclosure provide an information processing method and device, and a computer storage medium, so as to realize key sharing of vehicles in a simple and safe manner.

According to a first aspect of the present disclosure, an information processing method is provided. The method includes: at a server, determining a second mobile device on the basis of a task request from a first mobile device, the second mobile device being configured for receiving an authorization certificate of a vehicle associated with the first mobile device, and the task request including task information for identifying a task associated with the vehicle; sending vehicle status information of the vehicle, the task information, and the authorization certificate to the second mobile device; in response to determining that an unlocking request from the second mobile device includes the valid authorization certificate, sending an unlocking command to the vehicle so as to unlock the vehicle; in response to determining that the vehicle is unlocked, sending the vehicle status information to the first mobile device and the second mobile device; and updating a validity of the authorization certificate on the basis of the vehicle status information and the task information.

According to a second aspect of the present disclosure, an information processing device is provided, including: at least one processor; a memory coupled with the at least one processor, wherein the memory contains an instruction stored therein, and the instruction, when executed by the at least one processor, causes the device to execute the steps of the method according to the first aspect.

According to a third aspect of the present disclosure, a computer-readable storage medium is provided. A computer program is stored on the computer-readable storage medium, and the computer program, when executed by a processor, implements the method according to the first aspect.

The summary part is provided to introduce the selection of concepts in a simplified form, which will be further described in the following detailed description. The summary part is not intended to identify key features or main features of the present disclosure, and is also not intended to limit the scope of the present disclosure.

### BRIEF DESCRIPTION OF THE DRAWINGS

Through the more detailed description of the embodiments of the present disclosure in conjunction with the drawings, the above and other objectives, features, and advantages of the present disclosure will become more apparent. In the embodiments of the present disclosure, the same reference numerals generally represent the same components.
Fig. 1 illustrates a schematic diagram of a scenario in which the embodiments of the present disclosure can be implemented;
FIG. 2 illustrates a flow chart of a method according to an embodiment of the present disclosure;
FIG. 3 illustrates a flow chart of a method for determining a second mobile device according to an embodiment of the present disclosure;
FIG. 4 illustrates a flow chart of a method for updating a validity of an authorization certificate according to an embodiment of the present disclosure; and
FIG. 5 illustrates a schematic block diagram of a device capable of implementing the embodiments of the present disclosure.

### DETAILED DESCRIPTION

The principle of the present disclosure will be described hereinafter with reference to a plurality of exemplary embodiments shown in the drawings. Although the preferred embodiments of the present disclosure are shown in the drawings, it should be understood that these embodiments are described only for those skilled in the art to better understand and further realize the present disclosure, and do not limit the scope of the present disclosure in any way.

The term "including" and similar terms thereof used herein represents open inclusion, which means, "including but not limited to". Unless specifically stated, the term "or" represents "and/or". The term "based on" represents "at least partially based on". The term "one exemplary embodiments" or "one embodiment" represent "at least one exemplary embodiment". The term "another embodiment" represents at least one other embodiment. The terms "first", "second", or the like, may refer to different or identical objects. Other explicit and implicit definitions may be probably included below.

As previously mentioned, the traditional electronic key sharing solution often judges whether to continue sharing the key to other users only based on a validity period authorized to the key, and this judgment is difficult to give consideration to the needs of simplicity and security at the same time.

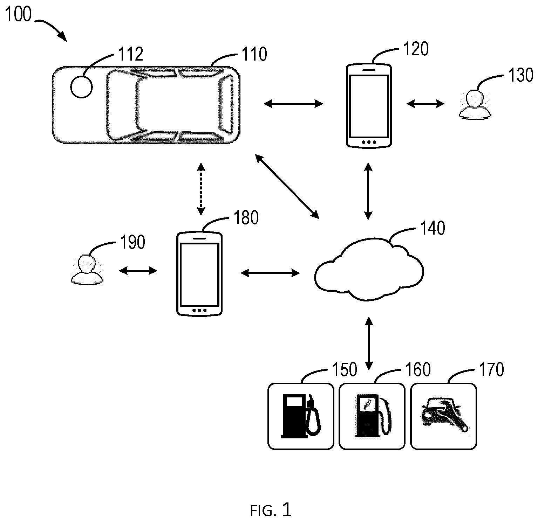

To at least partially solve one or more of the above-mentioned problems and other potential problems, the embodiments of the present disclosure provide an information processing solution. The solution can, on the basis of vehicle status information of a vehicle and task information for identifying a task, judge whether to share a key of the vehicle to a designated user to complete the task, and determines that an unlocking request includes the sent valid authorization certificate to unlock the vehicle. In this way, a user can conveniently send out a task request of the vehicle to be completed by a designated user while away from the vehicle, and automatically/manually determine whether to continue sharing the key of the vehicle to the designated user according to a task completion situation of the designated user, thereby sharing the key of the vehicle in a simple and safe way. The embodiments of the present disclosure will be described in details below with reference to FIG. 1 to FIG. 5.

Referring to FIG. 1 first, FIG. 1 illustrates a schematic diagram of a scenario 100 in which the embodiments of the present disclosure can be implemented. The scenario 100 includes a vehicle 110, mobile devices 120 and 180, users 130 and 190, a server 140, a gas station 150, a charging station 160 and a maintenance station 170.

In FIG. 1, the vehicle 110 is equipped with an on-board device 112 for receiving information from the mobile devices 120 and 180 and the server 140. Such information may be, for example, information related to unlocking/locking. In FIG. 1, it is assumed that the mobile device 120 is associated with the vehicle 110, that is, key information including a valid authorization certificate and used for unlocking/locking the vehicle 110 is stored on the mobile device 120, and the key information is stored on the on-board device 112. This may correspond to a case where the user 130 of the mobile device 120 is an owner of the vehicle 110. When the mobile device 120 is in a near field region of the vehicle 110, both the vehicle 110 and the mobile device 120 realize automatic connection because the vehicle 110 and the mobile device 120 both store the previously verified key information, such as bluetooth, ZigBee or near field communication (NFC). In this case, the vehicle 110 may be unlocked or locked, for example, because the mobile device 120 is operated with a predetermined action (e.g., by the user 130).In some embodiments, the on-board device 112 may also be configured to receive information from other vehicles (not shown). In some embodiments, the vehicle 110 may further include a sensor group (not shown) for collecting status signals related to the vehicle 110.

The mobile device 120 is configured to communicate with the vehicle 110 and the server 140. The communication between the mobile device 120 and the vehicle 110 may be mainly used for automatic connection with the vehicle 110, while the communication between the mobile device 120 and the server 140 may be mainly used for the mobile device 120 to send a service request and/or a task request to the server 140. The service request corresponds to a case where the user 130 aims to obtain service information related to the vehicle 110. The service request, for example, may include, but is not limited to, obtaining a component status of the vehicle 110, searching for a gas station/charging station/maintenance station near the vehicle 110, acquiring a navigation route of a designated destination, and the like. The user 130 may perform corresponding operations on the vehicle 110 on the basis of the service information. The task request herein corresponds to a case where the user 130 intends to complete a task related to the vehicle 110 by other users, such as a user 190 in FIG. 1). In this case, for example, when the user 130 is far away from the vehicle 110 or has no time to operate the vehicle 110, other users need to perform an operation with respect to the vehicle 110. This operation may include, for example, but is not limited to refueling/charging/repairing the vehicle 110, washing the vehicle, renting the vehicle, designated driver service, etc. The embodiments of the present disclosure mainly relate to a case where the mobile device 120 issues a task request to the server 140.

In some embodiments, the task request may be sent to the server 140 in response to the user 130 operating the mobile device 120 with a predetermined action. In some embodiments, the predetermined action may be an interaction with a display interface of the mobile device 120, such as touching, dragging or entering a text. In some embodiments, the predetermined action may also be other forms of interaction with the mobile device 120, such as inputting voice data to the mobile device 120, performing an air gesture operation over the display interface, and the like. This request sending mode can simplify the operation of the user 130, because the user 130 can send the task request by simply operating the predetermined action on the mobile device 120.

The server 140 is configured to implement the information processing method according to the embodiments of the present disclosure. Specifically, the server 140 may receive data from the mobile devices 120 and 180 and the vehicle 110, and perform corresponding processing on the basis of the received data. The server 140 may also communicate with the gas station 150, the charging station 160, and the maintenance station 170 in the scenario 100, and acquire information associated with the above stations for providing service information and task information of the vehicle 110. In some embodiments, the server 140 may be in the form of a cloud service platform.

In some embodiments, the server 140 may include a key management module and a plurality of other application modules, wherein the key management module is configured for managing and updating an authorization certificate associated with the vehicle 110. Since the mobile device 120 of FIG. 1 includes a valid authorization certificate, the key management module may store information identifying the mobile device 120 in an authorization list to indicate that the mobile device 120 can unlock or lock the vehicle 110. In a case that other mobile device (for example, the mobile device 180) includes the valid authorization certificate, the key management module may store information identifying the other mobile device in an authorization list to indicate that the other mobile device 120 can unlock or lock the vehicle 110. Key sharing is achieved when more than one mobile device can lock or unlock the vehicle 110.

In some embodiments, other application modules may include a sharing determination module for determining other mobile devices to receive a shared key. When a task request is received from the mobile device 120, the server 140 may call the sharing determination module to send a task invitation to other mobile devices (although only one other mobile device 180 is shown in FIG. 1, it should be understood that a plurality of other mobile devices are included in the scenario 100) in the scenario 100 according to a content of the task request. The server 140 may, in response to the firstly received confirmation of the task invitation from a certain other mobile device, determine the other mobile device as the mobile device to receive the shared key. In some cases, the server 140 may directly determine other designated mobile device as the mobile devices to receive the shared key without calling the sharing determination module. This may correspond, for example, to a case where the task request explicitly includes information of the designated other mobile device. The mobile device determined to receive the shared key, such as the mobile device 180 in FIG. 1, may receive a temporary valid authorization certificate for unlocking the vehicle 110 to complete a related task.

In some embodiments, other application modules may include a task progress determination module for determining a completion situation of the task associated with the vehicle 110. The task progress determination module may determine a completion progress of the task on the basis of the vehicle status information of the vehicle and the task information. In some cases, the task progress determination module may only generate information identifying whether the task is completed. In some cases, the task progress determination module may also generate information identifying an intermediate completion progress of the task. The information generated by the task progress determination module is a basis for judging whether the authorization certificate received by the mobile device 180 is valid.

Each of the gas station 150, the charging station 160, and the maintenance station 170 may record activity information associated with the vehicle 110, such as a refueling time, a refueling amount, a charging time, a charging amount, a maintenance record, and the like. The activity information may be sent to the vehicle 110 or the mobile device 120 via the server 140, and viewed by the user 130. The user 130 may determine whether a service request and/or a task request should be initiated on the basis of the activity information. Although the gas station 150, the charging station 160 and the maintenance station 170 are shown in FIG. 1, it should be understood that the scenario 100 may also include other facilities for recording the activity information associated with the vehicle 110.

The mobile device 180 is configured to communicate with the server 140. When the mobile device 180 is determined by the server 140 to be the mobile device to receive the shared key, the mobile device 180 is also configured to communicate with the vehicle 110. In this case, when the mobile device 120 is in the near field region of the vehicle 110, both the vehicle 110 and the mobile device 180 realize automatic connection because the vehicle 110 and the mobile device 180 both store the previously verified key information. In this case, the vehicle 110 may be unlocked or locked, for example, because the mobile device 180 is operated with a predetermined action (e.g., by the user 190). It should be noted that the shared key received by the mobile device 180 is only temporary, and when the authorization certificate included in the shared key expires, the mobile device 180 can no longer communicate with the vehicle 110. This is represented by a dotted line between the mobile device 180 and the vehicle 110 in FIG. 1. The dotted line indicates that the mobile device 180 and the vehicle 110 may not be able to communicate.

From the above discussion, it can be seen that the scenario 100 shown in FIG. 1 corresponds to the IoV (Internet of Vehicles) application scenario. In a case that the server 140 adopts a cloud service platform, real-time vehicle-cloud communication (e.g., communication between the vehicle 110 and the server 140), vehicle-to-vehicle communication (e.g., communication between the vehicle 110 and other vehicles not shown), vehicle-road communication (e.g., communication between the vehicle 110 and the gas station 150, the charging station 160 or the maintenance station 170 provided on both sides of the road), and vehicle-person communication (e.g., communication between the vehicle 110 and the user 130 via the mobile device 120) are realized. All the objects in the scenario 100 can realize interconnection and intercommunication, thus providing an intelligentizedloV scenario.

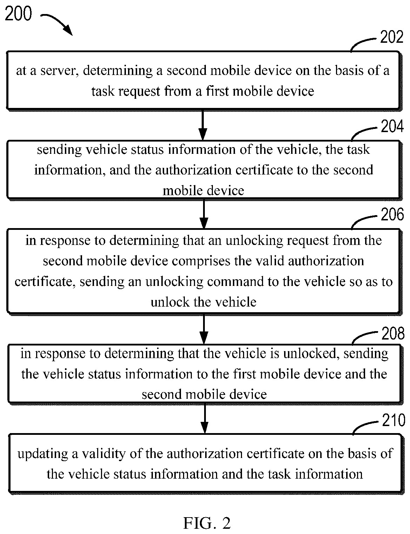

Please referring to FIG. 2 below, FIG. 2 illustrates a flow chart of an information processing method 200 according to an embodiment of the present disclosure. The method 200 may be performed by the server 140 in FIG. 1 and will be described in conjunction with FIG. 1. The method 200 may further include additional actions which are not shown and/or the illustrated actions may be omitted, and the scope of the present disclosure is not limited in this respect.

At box 202, at a server, a second mobile device is determined on the basis of a task request from a first mobile device, wherein the second mobile device is configured for receiving an authorization certificate of a vehicle associated with the first mobile device, and the task request includes task information for identifying a task associated with the vehicle. In some embodiments, the first mobile device may be a mobile device 120 in FIG. 1, and the vehicle associated with the first mobile device may be a vehicle 110. In this case, the task request from the first mobile device corresponds to a case where a user 130 intends to complete a task related to the vehicle 110 by other users.

As discussed above, when the user 130 of the vehicle 110 is in a location away from the vehicle 110 or has no time to operate the vehicle 110, the task request may be sent to the server 140 via the mobile device 120. In some embodiments, the task associated with the vehicle 110 correspond to a specific operation to be completed by the vehicle 110, and may include, but is not limited to, making the vehicle 110 go to a gas station 150 to fill up oil, making the vehicle 110 go to a charging station 160 to charge up power, and making the vehicle 110 go to a maintenance station 170 for maintenance. In some embodiments, the task may also be attached with time and place constraints, such as parking to a designated location after filling up the oil within a designated time period.

In some embodiments, the second mobile device may be a mobile device 180 in FIG. 1. In this case, the mobile device 180 is determined by the server 140 and is configured for receiving an authorization certificate of the vehicle 110 associated with the mobile device 120. In a case that the mobile device 180 has the valid authorization certificate, the mobile device 180 may be configured to communicate with the vehicle 110.

Subsequently, at box 204, vehicle status information of the vehicle, the task information, and the authorization certificate are sent to the second mobile device. This may correspond to the server 140 in FIG. 1 sending the vehicle status information of the vehicle 110, the task information and the authorization certificate to the mobile device 180. The vehicle status information may be used to identify a physical status of the vehicle and performances of vehicle components, and particularly includes information related to the task. In some embodiments, the vehicle status information is collected by the server 140 via a sensor group (not shown) of the vehicle 110. In some embodiments, the vehicle status information and the task information received by the mobile device 180 may be presented on a display interface of the mobile device 180, thereby facilitating the user 190 of the mobile device 180 to complete the task.

At box 206, in response to determining that an unlocking request from the second mobile device includes the valid authorization certificate, an unlocking command is sent to the vehicle so as to unlock the vehicle. This may correspond to the server 140 in FIG. 1 sending the unlocking command to the vehicle 110 in response to determining that the unlocking request from the mobile device 180 includes the valid authorization certificate. After the mobile device 180 receives the vehicle status information of the vehicle 110, the user 190 can know a location of the vehicle 110 and reach a near-field area of the vehicle 110 by driving a vehicle thereof or other methods. In this case, the mobile device 180 including the valid authorization certificate can issue an unlocking request, so that the server 140 can send an unlocking command to unlock the vehicle 110. In this case, both the mobile devices 180 and 120 in the near field region of the vehicle 110 can issue an unlocking request to unlock the vehicle 110, thereby realizing the key sharing between the mobile devices 180 and 120.

At box 208, in response to determining that the vehicle is unlocked, the vehicle status information is sent to the first mobile device and the second mobile device. This may correspond to the server 140 in FIG. 1 sending the vehicle status information to both the mobile devices 120 and 180 in response to determining that the vehicle 110 is unlocked. Therefore, the mobile device 120 is enabled to also obtain the vehicle status information of the vehicle 110 during a period when the mobile device 180 temporarily drives the vehicle 110 to complete the task. This enables the user 130 to monitor the vehicle 110 in real time during key sharing.

At box 210, the validity of the authorization certificate is updated on the basis of the vehicle status information and the task information. This may correspond to the server 140 in FIG. 1 updating the validity of the authorization certificate on the basis of the vehicle status information and the task information. The purpose of updating the validity of the authorization certificate is to determine a time limit for the key sharing so as to determine whether the mobile device 180 can continue to unlock the vehicle 110. In some embodiments, in addition to the predetermined time period of determining that the authorization certificate is no longer valid (i.e., invalid) when sharing the key, the authorization certificate may also be automatically determined as invalid on the basis of conditions such as determining that the task is completed and a request for stopping authorization from the mobile device 180 or 120. When the authorization certificate is updated to be invalid, the server 140 will no longer issue an unlocking command in response to the unlocking request from the mobile device 180. In other words, the mobile device 180 no longer has the right to communicate with the vehicle 110 to operate the vehicle 110.

Through the information processing method 200 shown in FIG. 2, the second mobile device for key sharing may be automatically determined in response to the task request sent by the first mobile device, and whether to continue key sharing with the second mobile device is automatically determined on the basis of the location information of the vehicle and the task information completed by the second mobile device. Therefore, a simpler and safer key sharing method is realized.

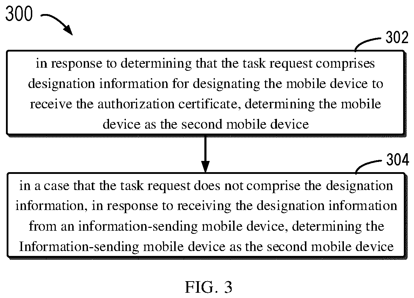

A method for determining the second mobile device will be described in further detail below with reference to FIG. 3. FIG. 3 illustrates a flow chart of a method 300 for determining a second mobile device according to an embodiment of the present disclosure. The method 300 may be performed by the server 140 in FIG. 1 and may be corresponding to the box 202 in FIG. 2. The method 300 may further include additional actions which are not shown and/or the illustrated actions may be omitted, and the scope of the present disclosure is not limited in this respect.

At box 302, in response to determining that the task request includes designation information for designating the mobile device to receive the authorization certificate, the mobile device is determined as the second mobile device. This may correspond to a case where the task request input by the user 130 in FIG. 1 includes designating the mobile device 180 as the mobile device to receive the authorization certificate. For example, if a content of the task request is "please ask Xiao Li to charge the power for me" (hereinafter referred to as "task request A" for convenience of description), then the task request includes designating a mobile device 180 of "Xiao Li" as the second mobile device to receive the authorization certificate. In this case, the mobile device 180 of "Xiao Li" realizes key sharing with the mobile device 120, and the vehicle 110 is unlocked and driven by "Xiao Li" to complete the task associated with the vehicle 110 (i.e., go to the charging station 160 to charge the vehicle 110, for example). Thus, the second mobile device can be designated through the method 300. It should be noted that the task request A does not make any restrictions on a destination of charging.

Subsequently, at a box 304, in a case that the task request does not include the designation information, in response to receiving the designation information from another mobile device, the another mobile device is determined as the second mobile device. This may correspond to a case where the task request input by the user 130 in FIG. 1 does not designate a mobile device to receive the authorization certificate. As an example, if the content of the task request is "find someone to help me fill up oil before leaving work" (hereinafter referred to as "task request B" for convenience of description), then the task request belongs to a situation that does not include the designation information. In this case, the server 140 may call a sharing determination module to issue a task invitation to other mobile devices besides the mobile device 120 in the scenario 100. In this case, the other mobile devices may present the task invitation on a corresponding application interface (e.g., an order receiving application interface), and may confirm the task invitation by operating with a predetermined action (e.g., touching a button to confirm order receiving). The mobile device (e.g., the mobile device 180) confirming the task invitation sends out designation information to the server 140, and the server 140, in response to receiving the designation information, determines the mobile device as the second mobile device. In this way, the method 300 may, in response to request information from another mobile device, determine the another mobile device as the second mobile device.

With the method 300, the second mobile device to receive the authorization certificate can be determined in different ways on the basis of the content of the task request.

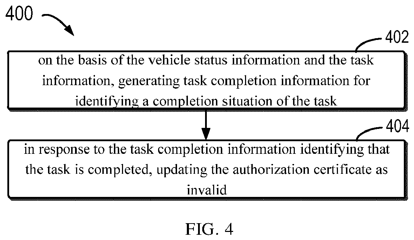

A method for updating the validity of the authorization certificate will be described in further detail below with reference to FIG. 4. FIG. 4 illustrates a flow chart of the method 400 for updating the validity of the authorization certificate according to an embodiment of the present disclosure. The method 400 may be performed by the server 140 in FIG. 1 and may be corresponding to the box 210 in FIG. 2. The method 400 may further include additional actions which are not shown and/or the illustrated actions may be omitted, and the scope of the present disclosure is not limited in this respect.

At box 402, on the basis of the vehicle status information and the task information, task completion information for identifying a completion situation of the task is generated. The task completion information may be configured for identifying whether the task is completed or not, and may also be configured for identifying whether the task is completed to a certain intermediate status. As an example, in a case where the server 140 in FIG. 1 receives the above task request B, the task completion information may be configured for identifying the following situations: whether the mobile device 180 is determined; whether the mobile device 180 unlocks the vehicle 110; whether the vehicle 110 arrives at a certain gas station, such as the gas station 150; whether the vehicle 110 is filled up with oil; and whether the vehicle 110 filled up with oil is parked at a designated location before leaving work (i.e., the task is completed). As another example, in a case where the server 140 in FIG. 1 receives the above task request A, the task completion information may be configured for identifying the following situations: whether the mobile device 180 of "Xiao Li" unlocks the vehicle 110; whether the vehicle 110 arrives at a certain charging station, such as the charging station 160; whether the vehicle 110 is charged up with power; and whether the vehicle 110 charged up with power is parked at a designated location (i.e., the task is completed).

Subsequently, at box 404, in response to the task completion information identifying that the task is completed, the authorization certificate is updated as invalid. Since the task completion information identifies that the task to be completed by the user 190 of the mobile device 180 is completed, it is not necessary for the mobile device 180 to continue to obtain the right for sharing the key. In this case, the authorization certificate received by the mobile device 180 is updated as invalid, so that the mobile device 180 cannot continue to share the key with the mobile device 120. This ensures the safety of the vehicle 110, and makes it unnecessary for the user 130 or 190 to perform additional operations to make the mobile device 180 return the key at the same time.

With the method 400, it is possible to determine a task completion status and update the validity of the authorization certificate by means of the task completion information generated in the middle.

Other specific implementations according to the embodiments of the present disclosure will be further described below.

In some embodiments, the task request is input when the first mobile device presents an application interface, and the application interface is presented in response to the first mobile device being operated with a predetermined action. For example, in FIG. 1, the user 130 may operate the mobile device 120 with a predetermined action, so that the mobile device 120 presents the application interface. The predetermined action may include, but is not limited to, touching, dragging on the display interface, gestures, inputting text, inputting voice, inputting pictures, inputting videos, and the like. When the mobile device 120 presents the application interface, the task request may be input in various forms, such as text, voice, video, menu selection, and the like.

In a case where the task request is input in the form of voice, the task request includes voice data. For example, the user 130 in FIG. 1 may first operate the mobile device 120 with a predetermined action (such as shaking) to present the application interface, and then input the following voice "before leaving work, ask someone to help me fill up oil!" in the application interface. In this case, the task request includes voice data having the content of the task request B.

In some embodiments, the first mobile device may add information about a task completion time to the task request on the basis of stored schedule information. As an example, the mobile device 120 in FIG. 1 may store schedule information associated with the user 130. When the user 130 inputs the task request A (i.e., "please ask Xiao Li to charge the power for me" on the application interface of the mobile device 120, the mobile device 120 can call a schedule application to judge whether to add the information about the task completion time to the task request. If the schedule information identifies that there are other vehicle-related events within a predetermined time period (for example, driving to a certain place after 3 hours), the mobile device 120 may automatically add the information about the task completion time (for example, 2.5 hours, 2 hours, etc.) to the task request A. In this way, the first mobile device may automatically add the information about the task completion time on the basis of the schedule information stored thereon. This further simplifies the way that the user inputs the task request.

In some embodiments, the vehicle status information includes at least one of the following: a location of the vehicle, a remaining electronic power of the vehicle, and a remaining oil amount of the vehicle. The location of the vehicle enables the user 190 to operate the mobile device 180 to find the vehicle 110 on one hand, and enables the user 130 of the mobile device 120 to track the vehicle 110 in real time on the other hand. The remaining electronic power of the vehicle is used for a task that the vehicle 110 goes to the charging station 160 for charging. The remaining oil amount of the vehicle of the vehicle is used for a task that the vehicle 110 goes to the gas station 160 for refueling. In some embodiments, the vehicle status information may also include, but is not limited to the following information of the vehicle: a single travelled distance, an accumulated travelled distance, historical refueling data, historical charging data, historical overhaul data, a real-time vehicle speed, an average vehicle speed, an interior temperature, an exterior temperature, an oil temperature, a battery temperature, a tire pressure, an intake pressure, a torque, or the like.

In some embodiments, the authorization certificate sent to the second mobile device automatically becomes invalid after a predetermined time period. This may cause the mobile device 180 to automatically lose the right to share the key with the mobile device 120 after the predetermined time period.

In some embodiments, the step of updating the validity of the authorization certificate includes: in response to receiving a request for stopping authorization from the first mobile device or the second mobile device, updating the authorization certificate as invalid. This may correspond to a case where the mobile device 120 or 180 in FIG. 1 needs to manually stop authorizing the mobile device 180. As an example, during a period when the user 190 of the mobile device 180 drives the vehicle 110 to complete the task, if the user 130 of the mobile device 120 thinks that the user 190 is not completing the task but doing other actions, for the sake of safety, the user 130 may send a request for stopping authorization to the server 140 on the application interface of the mobile device 120, so as to stop the mobile device 180 from sharing the key with the mobile device 120. As another example, during the period when the user 190 of the mobile device 180 drives the vehicle 110 to complete the task, if the user 190 cannot complete the task due to objective or subjective reasons, the user 190 may send the request for stopping authorization to the server 140 on the application interface of the mobile device 180, so as to stop the mobile device 180 from sharing the key with the mobile device 120. In this way, the key sharing authority of the mobile device 180 may be automatically stopped in response to the elapse of the predetermined time period or the completion of the task, or may be manually stopped in response to the operation of the user 130 or 190.

In some embodiments, the method 200 further includes: on the basis of the vehicle status information and the task information, determining a risk degree for indicating that the task is not completed; and on the basis of the risk degree exceeding a threshold, sending warning information to the first mobile device. The risk degree is intended to indicate a possibility that the user of the second mobile device (such as the user 190 in 190) is not completing the task, and thus indicates a possibility that the task is not completed. As an example, the server 140 may also, on the basis of the vehicle status information and the task information, determine a risk degree that the user 190 may not be completing the task, and on the basis of the risk degree exceeding the threshold, send the warning information to the mobile device 120, for example, to remind the user 130 to issue the request for stopping authorization. The user 130 may issue the request for stopping authorization via the mobile device 120 on the basis that the mobile device 120 receives the warning information.

In some embodiments, the method 200 further includes: in response to the validity indicating that the authorization certificate is invalid, sending a locking command to the vehicle so as to lock the vehicle. As described above, the validity is updated on the basis of the vehicle status information and the task information. When the validity indicates that the authorization certificate is invalid, the second mobile device of the mobile device 180 as shown in FIG. 1 should not continue to obtain the right to share the key with the mobile device 120. In this case, the server 140 sends the locking command to the vehicle 110 to lock the vehicle 110, thereby prohibiting the user 190 from continuing to drive the vehicle 110.In some embodiments, a prompt window prompting the user 190 to leave will be presented on a display device (not shown) of the mobile device 180 or the vehicle 110, and the vehicle 110 will be automatically locked after the user 190 leaves the vehicle 110 and closes the door. In some embodiments, when the locking command from the server 140 is received during the running of the vehicle 110, a prompt window prompting the user 190 to pull over and leave will be presented on the display device of the mobile device 180 or the vehicle 110. In some embodiments, in a case where the locking command from the server 140 is received during the running of the vehicle 110, the vehicle 110 may also, for example, be automatically pulled over on the basis of the vehicle status information.

In some embodiments, the task request includes voice data, and the second mobile device is determined by the server based on identification of the voice data and a semantic analysis result. This may correspond to a case where the user 130 inputs the task request in the form of voice on the application interface of the mobile device 120 in FIG. 1. In this case, the server 140 may call a voice recognition module for recognizing voice data, and the voice recognition module may, for example, convert voices into words through an open software toolkit SDK of a voice recognition service provider. The voice converted into the word form may be further analyzed by a semantic analysis module called by the server 140. Semantic analysis refers to a technology of learning and understanding a semantic content represented by a piece of text by using various machine learning methods. Recently, breakthroughs have been made in lexical semantic analysis based on word sense disambiguation, word embedding learning and semantic role labeling, and sentence-level and text-level semantic analysis is also developing rapidly. The purpose of the semantic analysis is to determine the second mobile device and determine the task information. As an example, when the user 130 inputs the task request B, a semantic analysis result determines the task information (i.e., "fill up oil..., before leaving work"), but does not determine the second mobile device, because the task request B does not include the designation information for designating the second mobile device. In this case, the server 140 may call a sharing determination module to determine the second mobile device. As another example, when the user inputs the task request A, a semantic analysis result determines the second mobile device (i.e., the mobile device of "Xiao Li"), and also determines the task information (i.e., "charge"). In this way, the task request may be input in a simpler way.

In some embodiments, the method 200 further includes: after determining the second mobile device, adding the second mobile device to an authorization list; and on the basis of the validity of the authorization certificate, updating the authorization list. The server 140 may store the authorization list of an identifier of the mobile device with the valid authorization certificate. At the beginning of the method 200, only the identifier of the mobile device 120 is included in the authorization list, which indicates that only the mobile device 120 has the right to unlock/lock the vehicle 110 at the beginning. When the server 140 determines that the mobile device 180 is the second mobile device, an identifier of the mobile device 180 is added to the authorization list. In this case, both the mobile devices 120 and 180 have the right to unlock/lock the vehicle 110. Subsequently, the validity of the authorization certificate is updated on the basis of the vehicle status information and the task information, and the authorization list is updated on the basis of the validity. When the authorization certificate received by the mobile device 180 is determined to be invalid, the identifier of the mobile device 180 is removed from the authorization list to indicate that the mobile device 180 no longer has the right to unlock/lock the vehicle 110.

In some embodiments, the method 200 further includes: determining a third mobile device on the basis of the task request, the third mobile device being configured for receiving another authorization certificate of the vehicle; sending another authorization certificate to the third mobile device; and updating a validity of the another authorization certificate. The another authorization certificate may similarly be used to unlock/lock the vehicle 110 in FIG. 1 and is received by another mobile device (not shown in FIG. 1) other than the mobile devices 120 and 180. Therefore, the method 200 realizes the function of simultaneously authorizing a plurality of mobile devices. This is especially useful when a task needs to be completed by a plurality of users.

As an example, the task may be that the vehicle 110 goes to the maintenance station 170 for maintenance. In addition to the mobile device 180 needing to obtain the right to unlock the vehicle 110, maintenance personnel of the maintenance station 170 also need to obtain the right to unlock the vehicle 110 at the maintenance station 170. In this case, the server 140 may determine that the mobile device 180 and a mobile device of the maintenance personnel are the second mobile device to receive the authorization certificate and the third mobile device to receive another authorization certificate respectively. Moreover, the validities of the authorization certificate and the another authorization certificate may be updated based on different conditions. As mentioned above, the validity of the authorization certificate received by the mobile device 180 may be updated on the basis of the vehicle status information and the task information, while the validity of the another authorization certificate received by the mobile device of the maintenance personnel may be updated only on the basis of the location of the mobile device and/or the current time. It can be seen from this that the validity of the another authorization certificate of the third mobile device may only be based on a specific environment of the third mobile device, for example, the third mobile device is in the maintenance station 170 and a specific area near the maintenance station 170. This allows the third mobile device to obtain the right to unlock/lock the vehicle 110 only during a specific location and/or time period, regardless of the task completed by the user 190 of the mobile device 180. This realizes a function of hierarchical authorization function of the plurality of mobile devices.

As another example, the task may be periodic lease of the vehicle 110. Specifically, the periodic lease includes that: the user 190 of the mobile device 180 in FIG. 1 first drives the vehicle 110 to arrive at a designated location A within a predetermined time period, and then the third mobile device of another user (not shown in FIG. 1) at the designated position A drives the vehicle 110 to a designated location B (which may be the same as a start location of the vehicle 110). In such a case, when the user 190 arrives at the designated location A, the server 140 may update the authorization certificate of the mobile device 180 to be invalid and update the another authorization certificate of the third mobile device to be valid on the basis of the vehicle status information and the task information, thereby allowing the third mobile device to unlock/lock the vehicle 110. In the process that another user of the third mobile device drives the vehicle 110 to the designated location B, the validity of the another authorization certificate may be updated on the basis of the location information of the third mobile device, the vehicle status information and the task information. In this way, it is possible to further ensure the safety of the vehicle when different users of a plurality of mobile devices respectively operate the vehicle 110.

Although two examples of simultaneous authorization of two mobile devices are listed above, it can be understood that simultaneous authorization of different mobile devices may be applied to any number of mobile devices and any application scenario. Particularly, the validity of the another authorization certificate may be updated on the basis of at least one of the following: location information of the third mobile device, a current time, the vehicle status information and the task information.

In some embodiments, in a case that the task information does not designate a specified time for completing the task (such as the task request A), a specified completion time may be designated on the basis of a type of task. For example, when the type of the task is refueling/charging, an earlier specified completion time may be designated, while when the type of the task is maintenance/overhaul, a later specified completion time may be designated. In some embodiments, the first mobile device (such as the mobile device 120 in FIG. 1) may adjust the specified completion time on the basis of the vehicle status information.

In some embodiments, the server 140 may also call an integrated fund collection and payment module. The fund collection and payment module is configured for integrating fund collection and payment functions in the method 200. As an example, when the mobile device 120 in FIG. 1 issues a task request to the server 140, the server 140, before determining the second mobile device, first estimates a price of the task associated with the vehicle 110 on the basis of the task request. In some cases, a plurality of prices of the task associated with the vehicle 110 may be estimated based on a possibility that different mobile devices (such as mobile devices of vehicles owners of different models), are determined as the second mobile devices. Subsequently, information indicating these price/prices may be sent to the mobile device 120 for the user 130 to pay. After the server 140 receives payment success information from the mobile device 120, the server 140 may continue to determine the second mobile device. As another example, in a case where the mobile device 120 sends out the payment success information, fund data associated with the mobile device 120 is not directly sent to the determined second mobile device (such as the mobile device 180 in FIG. 1) via the server 140. On the contrary, the fund data is temporarily stored in the server 140 by the fund collection and payment module. During a period when the mobile device 180 unlocks the vehicle 110 for the user 190 to perform related tasks via the server 140, the server 140 may determine whether to send the fund data to the mobile device 180 on the basis of the generated task completion information. Specifically, if the task completion information indicates that the task is completed, the server 140 may send the fund data to the mobile device 180. In some cases, the server 140 may determine whether to send a part of the fund data (i.e., a part corresponding to an amount paid by the user 130) to the mobile device 180 on the basis of the task completion information. In this way, a fund trusteeship function on the server 140 is realized. In some embodiments, the above-mentioned fund collection and payment module may be implemented on another server besides the server 140.

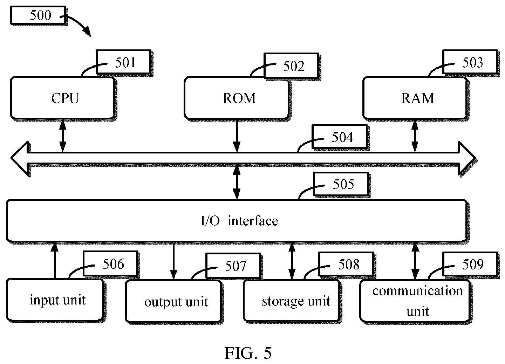

Referring to FIG. 5 continuously, FIG. 5 illustrates a schematic block diagram of a device 500 capable of implementing the embodiments of the present disclosure. For example, a server 140 as shown in FIG. 1 may be implemented by the device 500. As shown in the figure, the device 500 includes a central processing unit (CPU) 501, which can perform various appropriate actions and processes according to a computer program instruction stored in a read-only memory (ROM) 502 or loaded from a storage unit 508 into a random access memory (RAM) 503. In the RAM 503, various programs and data needed for operating the device 500 may also be stored. The CPU 501, the ROM 502, and the RAM 503 are connected to each other through a bus 504. An input/output (I/O) interface 505 is also connected to the bus 504.

A plurality of components in the device 500 are connected to the I/O interface 505, including: an input unit 506, such as a keyboard, a mouse, and the like; an output unit 507, such as various types of displays, speakers, and the like; a storage unit 508, such as a magnetic disk, an optical disk, and the like; and a communication unit 509, such as a network card, a modem, a wireless communication transceiver, and the like. The communication unit 509 allows the device 500 to exchange information/data with other devices through a computer network such as the Internet and/or various telecommunication networks.

The various processes and processing described above, such as the method 200, the method 300, and the method 400, may be performed by the processing unit 501. For example, in some embodiments, the method 200, the method 300, and the method 400 may be implemented as a computer software program, which is tangibly embodied in a machine-readable medium, such as the storage unit 508. In some embodiments, a part or all of the computer program may be loaded and/or installed on the device 500 via the ROM 502 and/or the communication unit 509. When the computer program is loaded into the RAM 503 and executed by the CPU 501, one or more actions of the method 200, the method 300 and the method 400 described above may be executed.

The present disclosure may be a method, an apparatus, a system and/or a computer program product. The computer program product may include a computer-readable storage medium carrying a computer-readable program instruction for performing various aspects of the present disclosure.

The computer-readable storage medium may be a tangible device that can hold and store an instruction used by an instruction executing device. The computer-readable storage medium may be, for example, but not limited to, an electrical storage device, a magnetic storage device, an optical storage device, an electromagnetic storage device, a semiconductor storage device, or any suitable combination of the above. More specific examples (non-exhaustive list) of the computer-readable storage medium include: a portable computer disk, a hard disk, a random access memory (RAM), a read-only memory (ROM), an erasable programmable read-only memory (ROM) (EPROM or flash memory), a static random access memory (SRAM), a portable compact disc read-only memory (CD-ROM), a digital versatile disc (DVD), a memory stick, a floppy disc, a mechanical coding device, such as a punch card or a bulge structure in a groove on which an instruction is stored, or any suitable combination of the above. The computer-readable storage medium used here is not interpreted as instantaneous signals, such as radio waves or other freely propagated electromagnetic waves, electromagnetic waves propagated through waveguides or other transmission media (for example, light pulses through fiber optic cables), or electrical signals transmitted through electric wires.

The computer-readable storage medium used here may be downloaded from a computer-readable storage medium to various computing/processing devices, or downloaded to an external computer or an external storage device through a network, such as the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives a computer-readable program instruction from the network and forwards the computer-readable program instruction for storage in the computer-readable storage medium in each computing/processing device.

The computer program instruction for performing operations of the present disclosure may be an assembly instruction, an Instruction Set Architecture (ISA) instruction, a machine instruction, a machine-related instruction, a microcode, a firmware instruction, status setting data, or a source code or an object code written in one programming language or any combination of more programming languages. The programming languages include object-oriented programming languages such as Smalltalk, C++, and conventional procedural programming languages such as "C or similar programming languages. The computer-readable program instructions may be executed entirely on a user computer, partially executed on the user computer, executed as an independent software package, partially executed on the user computer and partially executed on a remote computer, or entirely executed on the remote computer or a server. In the case of involving in the remote computer, the remote computer can be connected to the user computer via any kind of network, including a local area network (LAN) or a wide area network (WAN), or can be connected to an external computer (e.g., connected via the Internet using an Internet service provider). In some embodiments, electronic circuits, such as a programmable logic circuit, a field programmable gate array (FPGA), or a programmable logic array (PLA), can be customized by utilizing the status information of the computer-readable program instruction. The electronic circuits can execute the computer-readable program instruction, thereby implementing various aspects of the present disclosure.

Various aspects of the present disclosure have been described with reference to the flow charts and/or block diagrams of the method, apparatus (system), and computer program products according to the embodiments of the present disclosure. It should be understood that each block of the flow chart and/or block diagram and combinations of the blocks in the flow chart and/or block diagram can be implemented by computer-readable program instructions.

These computer-readable program instructions may be provided to a general purpose computer, a special purpose computer, or a processing unit of other programmable data processing device to produce a machine for the instructions executed by the computer or the processing unit of other programmable data processing device to generate an apparatus for implementing the functions/actions specified in one or more blocks of the flow chart and/or block diagram. These computer-readable program instructions may also be stored in a computer-readable memory that can guide the computer, the programmable data processing device and/or other apparatus to work in a given manner, so that the computer-readable medium stored with instructions includes a product including an instruction that implements various aspects of the functions/actions specified in one or more blocks of the flow chart and/or block diagram.

These computer-readable program instructions may also be loaded to a computer, other programmable data processing device, or other apparatus, so that a series of operating steps are executed on the computer, the other programmable data, or the other apparatus to produce processing implemented by the computer, so that the instructions executed in the other programmable data, or the other apparatus implement the functions/actions specified in one or more blocks of the flow chart and/or block diagram.

The flow charts and block diagrams in the drawings show the possibly implemented architectures, functions, and operations of the system, the method, and the computer program product according to multiple embodiments of the present disclosure. In this regard, each block in the flow chart or block diagram may represent one module, one program segment, or a part of an instruction. The module, the program segment, or the part of an instruction contains one or more executable instructions for implementing specified logical functions. In some alternative implementations, the functions noted in the blocks may also occur in a different order from those noted in the drawings. For example, two consecutive blocks may actually be executed in substantially parallel, and sometimes may be executed in reverse order, depending on the functions involved. It should also be noted that each block in the block diagrams and/or flow charts, and combinations of the blocks in the block diagrams and/or flow charts, may be implemented with dedicated hardware-based systems that perform specified functions or actions, or may be implemented with combinations of dedicated hardware and computer instructions.

Various embodiments of the present disclosure have been described above, and the above description is exemplary, not exhaustive, and is not limited to the disclosed embodiments. Many modifications and variations will be apparent to those of ordinary skills in the art without departing from the scope and spirit of the illustrated embodiments. Terms used herein are selected to best explain the principles and practical applications of various embodiments or technical improvements to technologies in the market, or to enable other people of ordinary skills in the art to understand various embodiments disclosed herein.

## Claims

1. An information processing method, comprising:
at a server, determining a second mobile device on the basis of a task request from a first mobile device, the second mobile device being configured for receiving an authorization certificate of a vehicle associated with the first mobile device, and the task request comprising task information for identifying a task associated with the vehicle;
sending vehicle status information of the vehicle, the task information, and the authorization certificate to the second mobile device;
in response to determining that an unlocking request from the second mobile device comprises the valid authorization certificate, sending an unlocking command to the vehicle so as to unlock the vehicle;
in response to determining that the vehicle is unlocked, sending the vehicle status information to the first mobile device and the second mobile device; and
updating a validity of the authorization certificate on the basis of the vehicle status information and the task information.

2. The method according to claim 1, wherein the task request is input when the first mobile device presents an application interface, and the application interface is presented in response to the first mobile device being operated with a predetermined action.

3. The method according to claim 1, wherein the vehicle status information comprises at least one of the following: a location of the vehicle, a remaining electronic power of the vehicle, and a remaining oil amount of the vehicle.

4. The method according to claim 1, wherein the step of determining the second mobile device comprises:
in response to determining that the task request comprises designation information for designating the mobile device to receive the authorization certificate, determining the mobile device as the second mobile device; and
in a case that the task request does not comprise the designation information, in response to receiving the designation information from another mobile device, determining the another mobile device as the second mobile device;

5. The method according to claim 1, further comprising:
on the basis of the vehicle status information and the task information, generating task completion information for identifying a completion situation of the task.

6. The method according to claim 5, wherein the step of updating the validity of the authorization certificate comprises:
in response to the task completion information identifying that the task is completed, updating the authorization certificate as invalid.

7. The method according to claim 1, wherein the authorization certificate sent to the second mobile device automatically becomes invalid after a predetermined period of time.

8. The method according to claim 1, wherein the step of updating the validity of the authorization certificate comprises:
in response to receiving a request for stopping authorization from the first mobile device or the second mobile device, updating the authorization certificate as invalid.

9. The method according to claim 1, further comprising:
on the basis of the vehicle status information and the task information, determining a risk degree for indicating that the task is not completed; and
on the basis of the risk degree exceeding a threshold, sending warning information to the first mobile device.

10. The method according to claim 1, further comprising:
in response to the validity indicating that the authorization certificate is invalid, sending a locking command to the vehicle so as to lock the vehicle.

11. The method according to claim 2, wherein the task request comprises voice data, and the second mobile device is determined by the server based on identification of the voice data and a semantic analysis result.

12. The method according to claim 1, further comprising:
after determining the second mobile device, adding the second mobile device to an authorization list; and
on the basis of the validity of the authorization certificate, updating the authorization list.

13. The method according to claim 1, further comprising:
determining a third mobile device on the basis of the task request, the third mobile device being configured for receiving another authorization certificate of the vehicle;
sending the another authorization certificate to the third mobile device; and
updating a validity of the another authorization certificate.

14. The method according to claim 13, wherein the validity of the another authorization certificate is updated on the basis of at least one of the following: location information of the third mobile device, a current time, the vehicle status information and the task information.

15. An information processing device, comprising:
at least one processor; and
a memory coupled with the at least one processor, wherein the memory contains an instruction stored therein, and the instruction, when executed by the at least one processor, causes the device to execute the steps of the method according to any one of claims 1 to 14.

16. A computer-readable storage medium storing a computer program thereon, wherein the computer program, when executed by a processor, implements the method according to any one of claims 1 to 14.
